(19) Europäisches Patentamt
European Patent Office
Office européen des brevets

(11) **EP 3 203 437 A1**

(12) **EUROPEAN PATENT APPLICATION**

(43) Date of publication:
**09.08.2017 Bulletin 2017/32**

(51) Int Cl.:
***G06T 5/00*** (2006.01)

(21) Application number: **16305129.5**

(22) Date of filing: **05.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **LEBRUN, Marc**
  **35576 Cesson-Sévigné (FR)**
• **HELLIER, Pierre**
  **35576 Cesson-Sévigné (FR)**
• **OISEL, Lionel**
  **35576 Cesson-Sévigné (FR)**

(74) Representative: **Huchet, Anne
  TECHNICOLOR
  1-5, rue Jeanne d'Arc
  92130 Issy-les-Moulineaux (FR)**

(54) **METHOD AND APPARATUS FOR LOCALLY SHARPENING A VIDEO IMAGE USING A SPATIAL INDICATION OF BLURRING**

(57)     Methods and an apparatus for locally sharpening a video using a spatial indication of blurring in a video signal are described. A method (300) includes obtaining (340) the spatial indication of blurring associated with the video signal, wherein the spatial indication of blurring is provided to locally adjust the sharpness of a video image of the video signal. Another method includes obtaining (710) a video signal, obtaining (720) a spatial indication of blurring, adjusting (730) the sharpness of the video signal using the indication of the blurring, and providing (740) the adjusted video signal for display on a display device. An apparatus (602) includes a tuner (602) that receives a video signal and a processor (604) for obtaining (either from metadata or from video signal processing) a spatial indication of blurring associated with the video signal, a video processor (605) that adjusts the locally sharpness of the video signal using the spatial indication of the blurring, and a display interface (606) that provides the adjusted video signal for display.

FIG. 8

EP 3 203 437 A1

**Description**

Technical Field

The present disclosure generally relates to a method and apparatus for locally sharpening video content using a blurring map. More specifically, the present disclosure relates to obtaining a spatial indication of blurring associated with video signal in order to locally sharpen a video image in the video signal.

Description of Background

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Blurring results in the video image appearing out of focus, having a grainy quality, or lacking sharpness in the edges present in the video content. The blurring may be present in the video image either intentionally, from the capture or as a byproduct of a resolution change. For example, one type of blurring arises from motion that is not properly characterized or maintained during the application of video compression. A second type of blurring may be intentionally introduced as an artistic effect by creating or modifying all or a portion of an image or object as out of focus. A third type of blurring may result from low or medium quality videos capture. The blurring may or may not be perceptible on all user devices.

To reduce the effect of blurring in a video image, video processing to sharpen the image may be performed. The image sharpening is typically performed in a receiving device prior to display to the user. Image sharpening is also performed classically on televisions. Image sharpening enhances the edges present in video content. The basic idea is to separate the low and high frequencies of the signal, and remix these components after an amplification of the high frequencies. However, the image sharpening is usually performed with little information regarding the source or reason for the blurring of the video image originally. Indeed the amount of sharpening depends on the user viewing preferences. In some countries, it is generally admitted that users push the sharpening at a maximum.

As a result, it is possible for the image sharpening in a receiving device to introduce its own set of undesirable video artifacts including, but not limited to, noise enhancement, temporal artifacts, or spatial artifacts in the video image. For instance, for low or medium quality videos, such as UGC (User Generated Content), an over amplification of high frequencies can lead to artifacts. For high quality content, typically professional movies, blurred images correspond to an artistic intent that needs to be preserved. In these cases, sharpening is locally not desirable, where a character (sharp area) is present on a blurred background. A global amount of sharpening does not lead to satisfactory results: a low sharpening can be insufficient for the sharp area, while a high sharpening leads to artefacts in blurred areas.

Therefore, there is a need for an improved characterization of the blur, referred to as a blur metric to tune the sharpening before display.

Summary

A salient idea of the present disclosure is to locally adapt the amount of sharpening in a video image with regard to a spatial (pixel-wise) estimation of blurring the video image, said spatial estimation being represented by a blur map. In a first embodiment wherein the processing of the content is distributed, the blur map is estimated and compressed on a server, and send as metadata along with the video signal to a receiver. In a second embodiment, the blur map is estimated and used directly in a receiver such as a television.

Thus, according to an embodiment of the present disclosure, a method is disclosed. The method includes obtaining a spatial indication of blurring associated with a video signal by a signal receiving device, wherein the spatial indication of blurring is used to locally adjust the sharpness of a video image of the video signal.

According to a particular characteristic, the spatial indication of blurring includes a blur metric for each pixel of each video image in the video signal.

According to another particular characteristic, the blur metric of a pixel of a video image is an average sum of singular values determined for a patch centered on this pixel of the video image using a Singular Value Decomposition. In a variant, the Singular Value Decomposition is applied on a difference image between said video image and a blurred version of said video image.

According to another particular characteristic, the spatial indication of blurring is computed at a server before distribution of the video signal and provided to a signal receiving apparatus by a streaming video service provider, for instance the spatial indication of blurring is included in metadata. In a variant, the spatial indication of blurring is encoded which advantageously reduces the payload of the spatial indication of blurring before being included in metadata.

According to a further embodiment, an apparatus implementing the spatial indication of blurring obtaining method is described.

According to a further embodiment, another method is described. The method includes obtaining a video signal, obtaining a spatial indication of blurring associated with the video signal, locally adjusting the sharpness of the video signal using the spatial indication of the blurring, and providing the adjusted video signal for display on a display device.

According to a particular characteristic, the spatial indication of blurring includes a blur metric for each pixel of each video image in the video signal.

According to another particular characteristic, the blur metric of a pixel of a video image is an average sum of singular values determined for a patch centered on this pixel of the video image using a Singular Value Decomposition. In a variant, the Singular Value Decomposition is applied on a difference image between the video image and a blurred version of the same video image.

According to another particular characteristic, the spatial indication of blurring is computed at a server before distribution of the video signal and received by a signal receiving apparatus from a streaming video service provider, for instance as metadata. In a variant, the spatial indication of blurring is encoded which advantageously reduces the payload of the spatial indication of blurring when received from a streaming video service provider.

According to another particular characteristic, the spatial indication of blurring is computed from the received video signal by the signal receiving apparatus.

According to another particular characteristic, the local adjusting further comprises separating a signal representing an image in the plurality of video images into a high frequency portion and a low frequency portion; locally adjusting the signal level of the high frequency portion of the separated signal using the spatial indication of blurring; and recombining the adjusted high frequency portion of the separated signal with the low frequency portion of the signal.

According to a further embodiment, an apparatus implementing the local sharpening method based on spatial indication of blurring is described.

According to a further embodiment, a computer program product comprising program code instructions to execute of the steps of the methods according to any of the embodiments and variants disclosed when this program is executed on a computer.

A processor readable medium having stored therein instructions for causing a processor to perform at least the steps of the methods according to any of the embodiments and variants is disclosed.

A non-transitory program storage device is disclosed that is readable by a computer, tangibly embodies a program of instructions executable by the computer to perform the methods according to any of the embodiments and variants is disclosed.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Brief Summary of the Drawings

These and other aspects, features, and advantages of the present disclosure will be described or become apparent from the following detailed description of the preferred embodiments, which is to be read in connection with the accompanying drawings.

FIG. 1 is a block diagram of a system for providing media content and associated metadata, for instance including a spatial indication of blurring, to users in accordance with the present disclosure;

FIG. 2 is a block diagram of an electronic device for processing media content and associated metadata including a spatial indication of blurring in accordance with the present disclosure;

FIG. 3 is a flowchart of a method for processing a content and generating metadata including a spatial indication of blurring in accordance with the present disclosure;

FIG. 4 represents a blur map based on SVD applied to original image and to the difference between the original image and a blurry version of the original image in accordance with the present disclosure;

FIG. 5 illustrates the result of the spatial blur sharpening based on blur map in accordance with the present disclosure;

FIG. 6 is a block diagram of a user device for receiving media content in accordance with the present disclosure;

FIG. 7 is a flowchart of a method for receiving and processing media content and metadata including a spatial indication of blurring in accordance with the present disclosure;

FIG. 8 is a flowchart of a method for receiving and processing media content to obtain a spatial indication of blurring in accordance with the present disclosure; and

FIG. 9 is a flowchart of a method for sharpening the image in a video signal using a spatial indication of blurring in accordance with the present disclosure.

It should be understood that the drawing(s) are for purposes of illustrating the concepts of the disclosure and are not necessarily the only possible configuration for illustrating the disclosure.

Detailed Description

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to enhancing the viewing experience of media content. The user may desire to improve the quality of the display video image by sharpening the video image. However, user initiated or other homogenous, static image sharpening processes may not significantly improve or may actually degrade the viewing experience. For instance, sharpening of low or medium quality videos, such as user generated content or content that requires a high level of video compression prior to delivery may over-amplify the high frequencies to improve the display of the video image. The over-amplification may lead to artifacts including, but not limited to, noise enhancement, temporal artifacts, and spatial image displacement artifacts. Higher quality content, such as professional movies that are delivered with a lower level of video compression, may include blurred images corresponding to an artistic intent that needs to be preserved. In these cases, sharpening of the video image is likely not desirable.

To that end, the present disclosure describes an apparatus and method for local sharpening of video content using a spatial indication of blurring. The apparatus and method may include processing a video signal to determine a spatial indication of the blurring in the video signal. The spatial blur indication may be determined in a number of ways.

Although the present disclosure describes one or more specific embodiments for generating, providing, and using blur indication information, or a blur metric, associated with a media content file (e.g., movie or television show) as it relates to media content conversion for delivery over a network, the principles may be applicable to other media content conversion and delivery mechanisms. For example, with some modifications, similar principles may be applied to disk replication techniques. Further, with some modifications, similar principles may be applied to media content creation and/or processing done by a user using home devices (e.g., a computer and portable camera). Still further, the spatial blur indication information may be used as part of additional video processing along with image sharpening in a receiving device to enhance the displayed video image, such as dynamic range enhancement processing. Such modifications are considered within the ability of one skilled in the art.

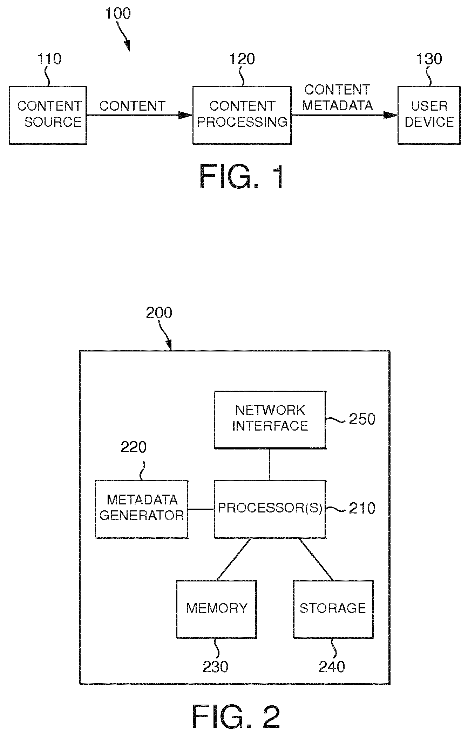

Turning now to FIG. 1, a block diagram of an embodiment of a system 100 for implementing media content delivery is shown. As such the system 100 includes a content source 110, content processing block 120, and a user device 130 coupled together. Each of these will be discussed in more detail below.

The content source 110 may be a server or other storage device, such as a hard drive, flash storage, magnetic tape, optical disc, or the like. The content source 110 may be located at a facility used by a content owner, a facility used by a content provider, or a facility used by a content aggregator. The content source 110 provides media content (e.g., audio and video) to content processing block 120. The media content may include content at more than one video resolution and/or video format. The media content may also include special content, such as visual effects (VFX) shots. The content may be in any number of formats and resolutions. In one embodiment, some or all of the media content is provided in ultra high definition (UHD) resolution and format, also known as 4K resolution using high dynamic range (HDR) contrast. Other formats and resolutions, including different combinations within the same media content are possible as are well known to those skilled in the art.

The content processing block 120 may be co-located with the content source 110 or may be located at a different facility (e.g., content source 110 at content owner facility and content processing block 120 at content aggregator facility). The content processing block 120 analyzes the media content from content source 110 to determine how to best optimize the conversion, reformatting, or scaling of the media content. The optimization, along with any processing, may be performed automatically within central processing block 120 with external inputs from an operator. The optimization may also be performed manually by an operator providing direct inputs for the various processing functions. The content processing block 120 may also encode, re-encode, or transcode some or all of the media content. The encoding, re-encoding, or transcoding may change the format or resolution of the media content in order to facilitate delivery over a network and reception by user device 130.

The content processing block 120 also provides metadata to accompany the media content. Some of the metadata may be provided along with the media content from the content source 110. Other metadata may be generated, or the provided metadata may be modified, based on the analysis of the original media content. The metadata may also be generated or modified based on the various processing functions (e.g., encoding, upscaling, conversion, re-formatting) performed in content processing block 120.

Examples of metadata fields for video processing may include:

Metadata - Luminance
Metadata - Chrominance
Metadata - Block Size
Metadata - Bit Depth
Metadata - Motion Vectors
Metadata - Noise Reduction Parameters
Metadata - Motion Estimation
Metadata - Quantization Levels
Metadata - Blur Metric
Metadata - Blur coding Parameters
Metadata - Color Information for High Dynamic Range
Metadata - Other

The user device 130 is typically interfaced to the content processing block 120 through one or more networks including, but not limited to, the Internet, a wide area network (WAN), and a broadcast medium (e.g., terrestrial, cable, satellite). The use device 130 typically includes circuitry for receiving and processing the media content and metadata received from the content processing block 120. The user device 130 also may include the processing circuitry for rendering or displaying the video portion of the media content at a desired resolution.

The user device 130 also receives and processes the metadata along with the media content. The user device 130 may use the metadata to optimize or improve the rendering or display of the media content. In certain embodiments, the metadata may be used to upscale visual effects or other portions of the media content from a lower resolution to a higher resolution. The user device 130 may be, but is not limited to, a gateway device, a television, a desktop computer, a laptop computer, a game console, a settop box, a smart phone, an augmented reality device, a virtual reality device, and a tablet.

In one embodiment, the metadata includes a spatial indication of blurring, such as a local blur metric value, as a result of video signal processing of the media content. The video data may have been either intentionally blurred or may become blurred due to, or as an artifact of, processing in processing block 120. The spatial blur indication may be used in conjunction with other metadata in a processing circuit in user device 130 to locally and spatially adapt the sharpening of the video images of the video content prior to display to the user. The local blur metric value may further be used to determine if sharpening of an area of a frame of the video content is necessary or desirable. The generation of spatial blur indication information as well as the use of the spatial blur indication to sharpen the video content for display will be described in further detail below.

Turning to FIG. 2, a block diagram of an electronic device 200 used for processing media content in accordance with the present disclosure is shown. The electronic device 200 includes one or more processors 210 coupled to metadata generator 220, memory 230, storage 240, and network interface 250. Each of these elements will be discussed in more detail below. Electronic device 200 may operate in a manner similar to content processing block 120 described in FIG. 1. Additionally, certain elements necessary for complete operation of electronic device 200 will not be described here in order to remain concise as those elements are well known to those skilled in the art.

The media content is received in electronic device 200 from a content source (e.g., content source 110 described in FIG. 1) and provided to processor(s) 210. The processor(s) 210 controls the operation of the electronic device 200. The processor(s) 210 runs the software that operates electronic device 200 and further provides the functionality associated with video optimization for the video portion of the media content such as, but not limited to, encoding, reformatting, converting and scaling. The processor(s) 210 also handles the transfer and processing of information between metadata generator 220, memory 230, storage 240, and network interface 250. The processor(s) 210 may be one or more general purpose processors, such as microprocessors, that operate using software stored in memory 230. Processor(s) 210 may alternatively or additionally include one or more dedicated signal processors that include a specific functionality (e.g., encoding, reformatting, converting, or scaling).

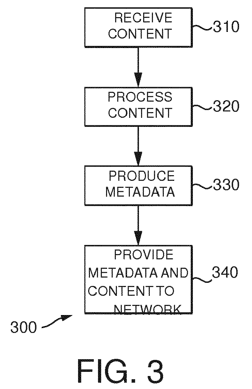

Metadata generator 220 creates parameters and informational data associated with the media content based on the originally received media content and/or the processed media content in processor(s) 210. The metadata may be generated based on the results of the analysis and optimization performed as part of the processing of the media content in processor(s) 210. The metadata may include instructions that will be provided to a user device (e.g., user device 130 described in FIG. 3) as to how to best optimize rendering or display of the visual content. For example, the metadata may include code or hardware specific instructions for an upscaler and/or decoder in the user device. In certain embodiments the metadata may be time synchronized to the particular scene that was analyzed in the scene analysis process.

The memory 230 stores software instructions and data to be executed by processor(s) 210. Memory 230 may also store temporary intermediate data and results as part of the processing of the media content, either by processor(s) 210 or metadata generator 220. The memory 230 may be implemented using volatile memory (e.g., static RAM), nonvolatile memory (e.g., electronically erasable programmable ROM), or other suitable media.

Storage 240 stores the data used and produced by the processor in executing the analysis and optimization of the media content for a longer period of time. In some cases, the resulting converted media content may be stored for later use, for instance, as part of a later request by a different user. Storage 240 may include, but is not limited to magnetic media (e.g., a hard drive), optical media (e.g., a compact disk (CD)/digital versatile disk (DVD)), or electronic flash memory based storage.

The network interface 250 provides a communication interface for electronic device 200 to provide the converted media content and associated metadata to other devices (e.g., user device 130 described in FIG. 1) over a wired or wireless network. Examples of suitable networks include broadcast networks, Ethernet networks, Wi-Fi enabled networks, cellular networks, and the like. It is important to note that more than one network may be used to deliver content to the other devices. For example, the media content and associated metadata may first be packaged for delivery over a cable network controlled by a service provider before terminating into one of the other suitable networks listed above.

In operation, the metadata generator 220 processes the video signal from the media content to produce a spatial indication of blurring for the video. The spatial indication of blurring, in conjunction with other metadata, may be provided to and used by a processing circuit in a user device (e.g., user device 130 described in FIG.1) to process the received video signal. In one embodiment, a blur metric value may be generated for each pixel of an image of the video signal and optionally compressed in metadata generator 220. The blur metric values, stored as a blur map with the same resolution than the image, may be used to pixel-wise sharpen the received video signal for display to a user. Sharpening the video signal typically removes or mitigates the blurriness present in the video signal. Sharpening the video may also improve the apparent focus in the video content and may also improve the definition of edges in the video content. The blur metric values may also be used to enhance the rendering or display of the video portion of the media content. The generation of a blur metric value for a pixel and optional compression of spatial blur indication will be described in further detail below.

It should be understood that the elements set forth in FIG. 2 are illustrative. The electronic device 200 can include any number of elements and certain elements can provide part or all of the functionality of other elements. Other possible implementations will be apparent to one skilled in the art given the benefit of the present disclosure.

Turning now to FIG. 3 an exemplary flow chart of a method 300 for processing a media content and generating metadata including a spatial indication of blurring in accordance with the present disclosure is shown. Method 300 may be implemented as part of content processing block 120 described in FIG. 1. Method 300 may also be implemented in a processing device such as electronic device 200 described in FIG. 2. Method 300 involves receiving media content 310, processing the media content 320, producing metadata including a spatial indication of blurring associated with the media content, and providing the metadata related to the media content along with the processed media content to a network for use in a user device (e.g., user device 130 described in FIG. 1).

At step 310, the media content is received from a content source, (e.g., content source 110 described in FIG. 1). The media content may include both an audio portion and a video portion.

Next, at step 320, media content is processed. The processing, at step 320, may include may also include analyzing the video portion of the media content to determine to determine how to best optimize the rendering or display of the content. In certain embodiments, the analyzing may take into account the rendering abilities and limitations of display rendering hardware (e.g., the display on a user device).

Certain visual conditions present in the media content may require an adjustment to various settings for noise, chroma and scaling to avoid artifacts and maximize the quality of the viewing experience. The optimizations can also account for the abilities or limitations of the hardware being used for the processing of the received media content in a user device. For example, some scenes may have a higher concentration of visual effects, animated shots may transition into a very detailed image, or portions of the video signal may have a very high contrast ratio. The variance in scenes require different encoding that may introduce blurring, either intentionally or as an artifact.

Next, at step 330, the results of the analysis and optimization performed as part of the processing of the media content, at step 320, are used to produce metadata. The metadata may include instructions for the rendering device 130 to best optimize rendering or display of the visual content. For example, the metadata may include code or hardware specific instructions for an upscaler and/or decoder of a user device (e.g., use device 130 described in FIG. 1). In certain embodiments the metadata may be time synchronized to the particular scene that was analyzed in the scene analysis process.

Examples of metadata instructions include generic parameters such as sharpness, contrast, or noise reduction. The metadata may also include specific instructions for different types of devices or hardware. In one embodiment, the metadata includes a spatial blur indication for some or all of processed media content file.

As described above, the generation of a blur metric value for each pixel of an image may be based on the analysis of processed media content. The pixel blur metric value may be specifically computed using the luminance information in the video signal portion of the media content. A specific implementation for a blur metric having properties that are beneficial for use in some situations, such as for use in metadata provided with media content, is described below.

The blur metric is based on a Singular Value Decomposition (SVD) of the image u as disclosed in "A consistent pixel-wise blur measure for partially blurred images" by X. Fang, F. Shen, Y. Guo, C. Jacquemin, J. Zhou, and S. Huang (IEEE International Conference on Image Processing 2014). The metric is computed on the luminance information, which is basically the average of the three video signal components.

The Multi-resolution Singular Value (MSV) local blur metric is given by

$$u = \sum_{i=1}^{n} \lambda_i e_i$$

(equation 1)

where $\lambda_i$ ($1 \le i \le n$) are the eigen values in decreasing order and the $e_i$ ($1 \le i \le n$) are rank-1 matrices called the eigen-images.

The idea is that the first most significant eigen-images encode low-frequency shape structures while less significant eigen-images encode the image details. Then, to reconstruct a very blurred image, one need only very few eigen-images. On the contrary, one need almost all eigen images to reconstruct a sharp image.

Furthermore for a blurred block, the high frequency details are lost much more significantly in comparison with its low frequency shape structures. Then only the high frequency of the image will be studied, through a Haar wavelet transformation. On the high frequency sub-bands, the metric will be the average singular value, also called Multi-resolution Singular Value (MSV).

As the metric is local or pixel-wise, the description of the code will stand for a patch of size k x k around the current pixel. Let's us denote by P the current patch.

First, the patch P is decomposed by Haar wavelet transform where only horizontal low-pass/vertical high-pass (LH), horizontal high-pass/vertical low-pass (HL) and horizontal high-pass/vertical high-pass (HH) sub-bands $P_{lh}$; $P_{hl}$ and $P_{hh}$ of size k/2 x k/2 are considered. Patchs $P_{lh}$; $P_{hl}$ and $P_{hh}$ are obtained by :

$$\forall (i,j) \in [\![1, \frac{\kappa}{2}]\!]^2,$$

$$P_{lh}(i,j) = \frac{1}{2}(P(2i,2j) - P(2i,2j+1) + P(2i+1,2j) - P(2i+1,2j+1))$$

$$P_{hl}(i,j) = \frac{1}{2}(P(2i,2j) + P(2i,2j+1) - P(2i+1,2j) - P(2i+1,2j+1))$$

$$P_{hh}(i,j) = \frac{1}{2}(P(2i,2j) - P(2i,2j+1) - P(2i+1,2j) + P(2i+1,2j+1))$$

(equation 2)

Then a Singular Values Decomposition is applied on each sub-bands Ps to get the K/2 singular values $\{\lambda_{Si}\}_i$

Then the local blur metric associated to the patch P is

$$\mathcal{B}_P = \frac{2}{3\kappa} \sum_{s=1}^{3} \sum_{i=1}^{\kappa/2} \lambda_{s_i}$$

(equation 3)

As the local metric is obtained for a whole patch, we need to decide to which pixel this measure will be associated. As the Haar decomposition need a power of two side blocks, the patch can't be centered around one pixel. Then two variants are disclosed :

- $B_P$ is associated to the top left pixel. The metric remains exactly local, but is shifted;
- $B_P$ is associated to all the pixels belonging to this patch. Then one pixel will have $k^2$ measures that are averaged to get one local metric for each pixel.

The skilled in the art will appreciate that the most time consuming process is the computation of the SVD. However as the size of the patches is fixed to k= 8, then the SVD is performed on 4x4 matrices. Theoretically the singular values are the square roots of the eigen values of the symmetrized matrices $MM^t$ (where M is the matrix of one sub-band patch Ps). The singular values are the roots of the characteristic polynomial of the symmetrized matrices.

As one can have the explicit solution of the roots of a 4th degree polynom, this solution is way much faster. The simplification is done as following:

- Compute the symmetric matrix $MM^t$;
- Get its characteristic polynomial P;
- Get the four real positive roots of P $\{r_i\}_i$
- Average the singular values $\lambda_i = \sqrt{r_i}$

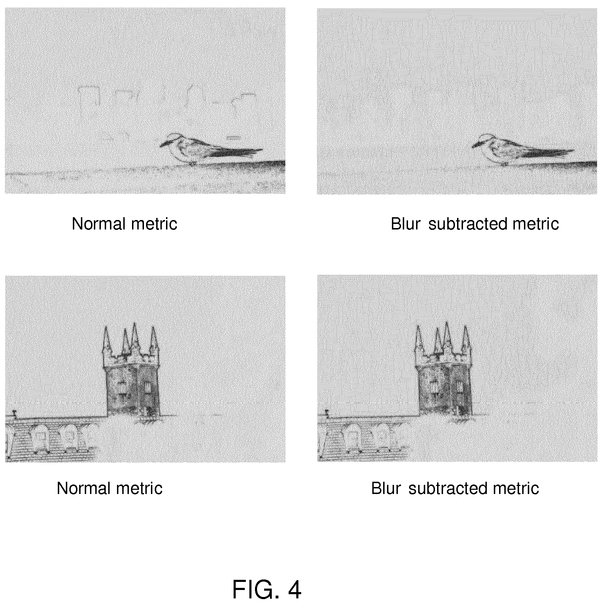

However, as shown on figure 4, the blurred edges are detected much sharper than they should be. As the difference between a blur region and a blurred blur region is small while on the contrary the difference between a sharp region and a blurred sharp region is large, the processed image to get the local MVS based metric is the difference image between the input image and a blurry input image. For instance, the blurry image is obtained by applying a Gaussian blur of $\sigma = 2.5$.

Advantageously, as shown on figure 4, the blurred edges are removed with the blur subtracted metric. It is important to note that it is not useful to sharpen portion of a blurred image that actually do not correspond to true sharp edges.

The skilled in the art understand that since the local blur metric is pixel-wise, the local blur map obtained by the MSV metric has the same size as the original image with only one component. This blur map may be used in various application, such as sharpening and shall be applied for some applications directly by the display device. Thus in the embodiment where the blur map is directly determined by the receiver or the display device, the size of blur map is not an issue. However, in the embodiment where the blur map is will be sent to the receiver as metadata along with the media content media, and the blur map needs to be heavily compressed to have the minimum feasible payload while keeping boundaries sharp.

Optionally, at step 330, the blur map is compressed. A first variant consists in zooming-out the local blur map. If local map of blur has the full resolution of the input frame, typically 1920x1080, the size of the local blur map is decreased by using a 2x zoomed-out input image of size 960x540.

A second variant consists in using a zero-padding method to shrink the local blur map which is then encoded. A FFT (Fast Fourier Transform) is applied on the full resolution of the local blur map m thus resulting in m = $F(m)$.

The FFT provides two arrays (one for imaginary values $\hat{m}_i$ and one for real values $\hat{m}_r$. As the input is real, the FFT is symmetric, and can be stored in $h \times \left(\frac{w}{2} + 1\right)$ arrays, where ($h$, $w$) is the size of the original blur map. Therefore the two arrays $\hat{m}_i$ and $\hat{m}_r$ have the same size as the original blur map m. Advantageously, the zero-padding consists in setting to zero the high frequencies of the FFT spectrum in order to keep only $2\left(\frac{h}{k}\right)\left(\frac{w}{k}\right)$ coefficients in the array where k is the compression factor.

Then the two arrays of $2\left(\frac{h}{k}\right)\left(\frac{w}{k}\right)$ real and imaginary coefficients have to be stored. If the original coefficients of the image are big enough (typically with a magnitude of $10^5$), then the coefficients of the FFT will be big enough to be rounded to integer values without loss of details. Therefore, before computing the FFT, the min m and max M values of the input image are computed, and the coefficient are multiplied by $\mu = 10^{5-log10(M)}$.

As generally the bigger coefficient of the FFT belongs to the mean, the mean of the input image is subtracted and stored. This allows to have almost the same significant number of digits for all FFT coefficients when they are paired and truncated in base 2. Thus a salient idea is to concatenate both arrays into only one by pairing real and imaginary coefficients. As the values are big enough, they are first converted to integer. Any efficient pairing function is compatible with the present variant. The rounding function described hereafter has the interesting property of being symmetric over the paired values. Real and imaginary integers are advantageously equally affected by the dropping of bits during the storage. The pairing function is done as the following:

1. Compute $m_f$ the minimum value of both arrays;
2. Denote by $f_r$ and $f_i$ both float values to store;
3. Get $i_r$ and $i_i$ the positive integer values to pair where :

$i_r$ = round($f_r$) - $m_f$ and $i_i$ = round($f_i$) - $m_f$

4. Convert $i_r$ and $i_i$ into 16 bits binary representations $b_r$ and $b_i$;
5. Drop the $N_b$ unwanted least significant bits for each $b_r$ and $b_i$;
6. Interlace the bits of both numbers into one b;
7. Get the corresponding integer i to the 16 bits binary representation b.

Advantageously, the interlacing of the bits is better than just concatenate their string representation since they take less than 16 bits to be coded. Therefore the value will be of an average of $2^{log2(ir)-Nb+log2(ii)-Nb}$ instead of $2^{32-2Nb}$.

Advantageously, in another variant, 4 bits can easily be dropped during this process without losing a lot of details for the MSV local blur map. With this variant, the stored integers are in range of $[10^0; 10^5]$.

Thus with small loss of precision a 1920x1080 local blur map is stored in a 31 x36 array of integer values in a range of $[0, 10^6]$. In addition to this array, the above mentioned 17 integer or float values may need to be stored in the metadata as parameters used by the compression/decompression process:

| | XML | Description | Range | Default value |
|---|---|---|---|---|
| <size> | <channels> | Number of channels of the input image | $[1, 3]$ | 1 |
| | <width> | Width of the input image | $[10^1, 10^4]$ | 1920 |
| | <height> | Heigth of the output image | $[10^1, 10^4]$ | 1080 |
| <params> | <sp> | Size of the boundary around the image | $[10^0, 10^2]$ | 0 |
| | <lambda> | Coefficient for the TV regularization | $[-1, 10]$ | -1 |
| | <adjust> | Adjust the values into HSV color space | boolean | 0 |
| | <doSqrt> | Apply a square root to the values | boolean | 0 |
| | <sample> | The input map have been down-sampled | boolean | 0 |
| | <factor> | $\kappa$ | $[2^1, 2^8]$ | 2 |
| <data> | <w> | Width of the shrinked FFT | $[10^1, 10^4]$ | $1920/\kappa$ |
| | <h> | Height of the shrinked FFT | $[10^1, 10^4]$ | $2*1080/\kappa$ |
| | <minval> | Minimum value of the input image | $[0, 10^5]$ | 0 |
| | <maxval> | Maximum value of the input image | $[0, 10^5]$ | 255 |
| | <bitloss> | $N_b$ | $[0, 16]$ | 0 |
| | <mean> | Mean of the shrinked FFT | $[0, 10^5]$ | 0 |
| | <norm> | $\eta$ | $[10^0, 10^5]$ | 1 |
| | <minFFT> | Minimum value of the shrinked FFT | $[-10^5, 10^5]$ | 0 |

In a variant, such parameters are sent off-line to the receiver and locally stored.

Next at step 340, once the metadata is produced and, if necessary, compressed, in step 330, the metadata along with the converted media content is provided for delivery to a user device over a network.

As described earlier the computed local metric for blur and above mentioned parameters may be provided to a user device (e.g., user device 130 described in FIG. 1) in order to locally improve the sharpness of the delivered video signal.

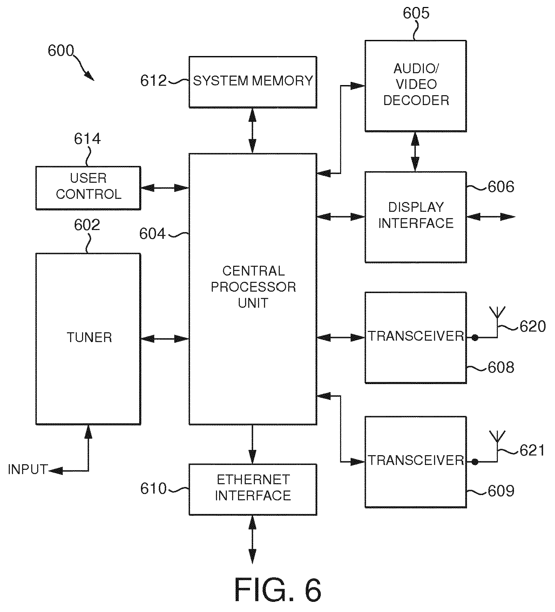

Turning to FIG. 6, a block diagram of an exemplary user device 600 according to aspects of the present disclosure is shown. User device 600 may operate in a manner similar to user device 130 described in FIG. 1. User device 600 may also be configured as a home gateway device capable of receiving a signal including media content and metadata over a wired or wireless network and capable of providing a video output signal for display. Specifically, user device 600 receives an input signal from a cable or digital subscriber line (DSL) network. It is important to note that other embodiments similar to user device 600 are also possible using aspects of the present disclosure described here including, but not limited to, a television, a desktop computer, a laptop computer, a game console, a settop box, a smart phone, an augmented reality device, a virtual reality device, and a tablet.

In user device 600, an input signal containing media content that has been processed for streaming delivery along with metadata is provided as an input to tuner 602. Tuner 602 connects to central processor unit 604. Central processor unit 604 connects to audio/video decoder 605, display interface 606, transceiver 608, transceiver 609, Ethernet interface 610, system memory 612, and user control 614. Audio/video decoder 605 further connects to display interface 606. Transceiver 608 further connects to antenna 620. Transceiver 609 further connects to antenna 621. It is important to note that several components and interconnections necessary for complete operation of user device 600 are not shown in the interest of conciseness, as the components not shown are well known to those skilled in the art. User device 600 may be capable of operating as an interface to a cable or DSL communication network and further may be capable of providing an interface to one or more devices connected through either a wired and wireless home network.

Tuner 602 performs RF modulation functions on a signal provided to the network and demodulation functions on a signal received from the network. The RF modulation and demodulation functions are the same as those commonly used in communication systems, such as cable or DSL systems. Tuner 602 provides the demodulated signal to central processor unit 604. Central processing unit 604 digitally processes the signal to recover the media content and metadata. Central processing unit 604 also includes circuitry for processing the metadata along the with media content in order to provide an improved viewing experience for the video signal in the media content. Similarly, central processor unit 604 also processes and directs any data received from any of the interfaces in gateway 600 for delivery to tuner 602 and transmission to the network.

In one embodiment, the metadata may include a spatial indication of blurring for the media content. The spatial blur indication may include a local blur metric for each pixel of each video frame, such as described earlier. A blur map gathering the local blur metrics may be compressed for transmission.

In another embodiment, the spatial indication of blurring is not included in the metadata but determined for the media content by the receiver.

Audio/video decoder 605 processes the video portion of the demodulated signal. The processing may include transport layer processing as well as video decoding using one or more video decoding standard, such as Motion Picture Entertainment Group (MPEG) standard MPEG-2 coding, Advance Video Coding (AVC), or High Efficiency Video Coding (HEVC). Audio/video decoder 605 may also process the decoded video for use with a video display through display interface 606. Audio/video decoder 605 may further process the audio portion of the demodulated signal using any one of a number of audio decoding standards and provide the audio signal to an audio interface, not shown.

System memory 612 supports the processing and control functions in central processor unit 604 and also serves as storage for program and data information. Processed and/or stored digital data from central processor unit 604 is available for transfer to and from Ethernet interface 610. Ethernet interface may support a typical Registered Jack (RJ) type RJ-45 physical interface connector or other standard interface connector and allow connection to an external local computer. Processed and/or stored digital data from central processor unit 604 along with video signals from video decoder 605 are also available for display through display interface 606. Display interface 606 provides an interface to a display unit, such as a monitor or television. In some embodiments, the display unit may be included in user device 600 as part of display interface 606. Processed and/or stored digital data from central processor unit 604 is additionally available for exchange with transceiver 608 and transceiver 609. Transceiver 608 and transceiver 609 can both support multiple operations and networked devices simultaneously. Central processor unit 604 is also operative to receive and process user input signals provided via a user control interface 614, which may include a display and/or a user input device such as a hand-held remote control and/or other type of user input device.

In operation, media content, along with metadata that is associated with the media content is received from a network, processed through tuner 602 and provided to central processor unit 604. Metadata, including the spatial indication of blurring, is extracted in central processor unit 604 and provided to audio/video decoder 605 along with the video stream portion of the media content. Alternatively, the spatial indication of blurring, is determined from the media content by central processor unit 604 and also provided to audio/video decoder 605. The spatial blur indication is used during the processing of the video portion of the media content in video decoder 605 in order to locally tune the level of sharpening of the video image based on the desired display performance or display capabilities.

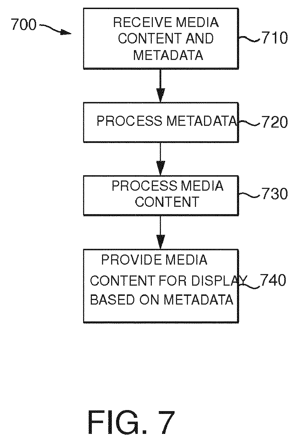

Turning to FIG. 7 a flowchart of a method 700 for receiving and processing metadata associated with media content in accordance with the present disclosure is shown. Method 700 may be implemented as part of user device 130 described in FIG. 1. Method 700 may also be implemented as part of user device 600 described in FIG. 6. Method 700 includes receiving the media content to be optimized for display along with metadata used for optimizing the media content, processing the metadata to determine the parameters (e.g., a blur map), processing the media content including modifying the media content based on the parameters, and providing the processed video content portion of the media content for display. Each of these steps will be discussed in further detail below.

At step 710, the media content along with the metadata is received over a network. The media content and metadata may be streamed as a data file to a user device (e.g., user device 600 described in FIG. 6) over a broadcast service provider network or may be delivered through a wired or wireless network from the Internet.

Next, at step 720, the received metadata is processed. The metadata is processed to extract instructions and parameters that may be used in conjunction with video processing performed on the media content in a user device. Parameters, such as a local blur map and/or additional compression parameters, are extracted and may be used in conjunction with reformatting and video rescaling to adjust the video sharpening of video signal. The encoded blur map first need to be decoded with a corresponding unpairing function, as described hereafter:

1. Convert the read integer i to a 32 bits binary representation $b$;
2. De-interlace the bits of $b$ into $b_r$ and $b_i$;
3. Add $N_b$ zeros in least significant bits to compensate the dropped bits during the compression;
4. Get the integers $i_r$ and $i_i$ from these binary representations $b_r$ and $b_i$;
5. Store them as float and add the minimum value $m_f$:

$$f_r = \text{cast<float>}(i_r) + m_f \text{ and } f_i = \text{cast<float>}(i_i) + m_f$$

And then an inverse FFT function is applied to float values $f_r$ and $f_i$ to recover the original blur map.

In a variant, in order to have a smoother blur map, a TV regularization (or any other one that preserves edges) is be applied. The main interest is to remove ringing artifacts due to huge compression. As previously explained, it is not useful to amplify high frequency components of a blurred image that actually do not correspond to true sharp edges.

The local blur map is used to spatially indicate the presence of blurriness in a video frame to a user. As such, the metadata may also include adjustment to various settings for noise, chroma, and scaling to avoid artifacts and maximize the quality of the viewing experience on the user device.

Next, at step 730, the media content is processed. The media content may be processed based on inherent instructions included in the metadata for the media content. The processing may include decoding, decompression, rescaling, and conversion functions. In some embodiments, the inherent instructions may reverse some or all of the video processing functions that were applied to the original media content (e.g., in central processing block 120 described in FIG. 1).

In addition, the processing, at step 730, may be replaced or augmented based on instructions and parameters recovered from the received metadata at step 720. The instructions and parameters provided by the metadata for handling or otherwise presenting the video portion of media content may be used for optimizing the processing functions of some or all of the media content. The optimization of the processing based on the metadata may include accounting for the abilities or limitations of the hardware being used for the rendering or display of the media content. In one embodiment, the spatial blur indication, such as a local blur metric, is used in conjunction with the optimization and processing of the media content in order to locally tune the sharpening of the video image for display. Further details regarding the use of spatial blur indication information in a receiving device will described below.

According to the present principles, at step 730, an input image I, is separated into high-frequency component $I_h$ and a low frequency component $I_l$, which is equal to $I - I_h$. The separation may be performed using many different types of filters including, but not limited to, an iterated median filter, edge preserving filters, bilateral filter, and a rolling guidance filter.

The high frequency component of the separated image is adaptively amplified or tuned according to the local blur map to enhance edges and sharpen the image using an amplification coefficient $\alpha$. In known unsharp masking, the coefficient $\alpha$ is fixed for all pixels in the image. Advantageously, the blur map is used to tune locally the coefficient. If $B(x, y)$ denotes the blur map at point coordinates $(x, y)$ for the image I then

$$\alpha(x,y) = f(B(x,y)) \qquad \text{(equation 4)}$$

Where the mapping function $f$ is a continuous, monotonously decreasing function. The more blur that is present at a pixel in the image, the less sharpening (i.e., less amplification or smaller coefficient $\alpha$) of the high frequency component of the separated image occurs. In a preferred variant, the mapping function $f$ is a decreasing exponential function. However, other implementations may use linear decreasing function, inverse sigmoid, cosine function, polynomial function.

In a variant implementation, the blur map histogram is first equalized. Advantageously the local blur metric $B(x, y)$ thus belongs to the 8 bits coding interval [0;255].

Accordingly :

$$if \; B(x,y) = 0 \; then \; \alpha(x,y) = \alpha_{max} \qquad \text{(equation 5)}$$

$$if \; B(x,y) = 0 \; then \; \alpha(x,y) = 1$$

Where $\alpha_{max}$ is an integer, strictly higher than 1, corresponding to the maximum of the sharpening parameter of the television, for instance determined by the user through the remote control.

It is important to note that it is not useful to amplify high frequency components of a blurred image that actually do not correspond to true sharp edges.

Finally, the processed high frequency portion of the separated image is recombined with the low frequency portion to form a processed image, given by the following equation:

$$I_{processed}(x,y) = (I(x,y) - I_h(x,y)) + \alpha(x,y) * I_h(x,y) \qquad \text{(equation 6)}$$

In a variant, the operations (addition/subtraction and multiplication) on images are performed in a Generalized Linear System (GLS) as proposed in "A generalized unsharp masking algorithm" by Deng (in IEEE Transactions on Image Processing, 2011) so as to remain in the coding domain of the image.

At step 740, the processed media content that has been further optimized based on the received metadata is provided for display. The display may be a separate display device from the user device or may be integrated as part of the user device that received the media content and optionally metadata from the network.

It is important to note that, in some embodiments, the media content and the metadata may not be provided together. For example, the media content file may be downloaded or provided as a data file stream over a network and stored. At a later time, a user device may be identified for display of the media content and a separate metadata file may be downloaded and used to augment and/or improve the processing of the media content to enhance the visual appearance of the media content on the identified user device. In other embodiments, the media content file may be provided on a storage medium, such as a DVD, Blu-Ray DVD, flash memory, or hard drive. The metadata file may be downloaded or provided as a data file stream over a network at a later time such as when the user desires to view the media content file. Other possible delivery mechanisms and formats are also possible as are known to those skilled in the art given the benefit of this disclosure.

It is also important to note that, in some embodiments, the metadata may not be provided, and the generation of a local blur metric may be based on the analysis of processed media content is performed in the user device. For example, the media content file may be downloaded or provided as a data file stream over a network and stored. At a later time, a user device may be identified for display of the media content and local blur metric is determined and used to augment and/or improve the processing of the media content to enhance the visual appearance of the media content on the identified user device. Accordingly, the blur map generation described with reference to figure 3 is implemented in step 730 with the processing of the content instead of being extracted from metadata in step 720. Advantageously, no compression of the blur map is needed.

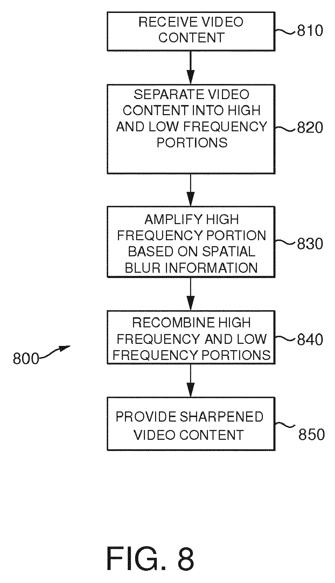

Turning to FIG. 8 a flowchart of a process 800 for locally sharpening the image in a video display signal using a spatial indication of blurring in accordance with the present disclosure is shown. Process 800 will primarily be described in relation to user device 600 described in FIG. 6. Some or all of process 800 may be implemented as part of video decoder 605 and/or central processing unit 604 described in FIG. 6. Process 800 may also be implemented as part of user device 130 described in FIG. 1.

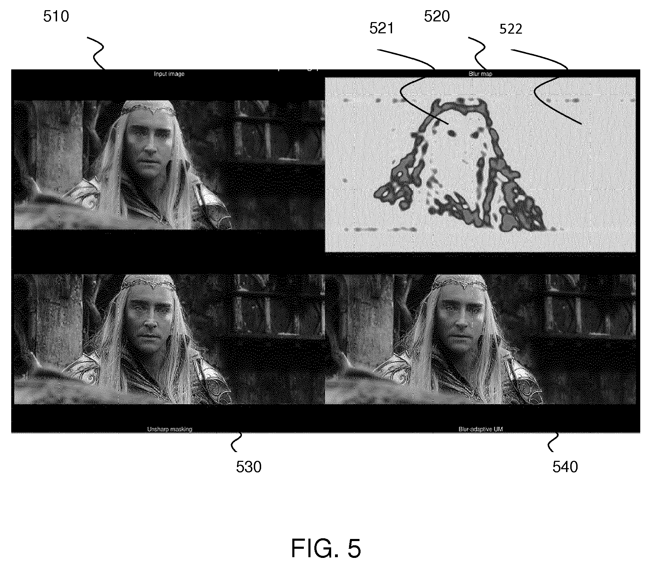

Process 800 may include extracting metadata, including the spatial indication of blurring and providing the blur map, along with a video signal, for video decoding. The spatial indication of blurring is used during the processing of the video image of the media content in video decoder 605 in order to sharpen the video image. The image sharpening may be a preset operational condition, such as a condition established by a media content service provider, or may be based on the desired display performance or display capabilities. As previously exposed, the video images in the video content are separated into a high frequency portion and a low frequency portion. The high frequency portion of the separated video image is then locally amplified to enhance edges and sharpen the image using a pixel-wise amplification coefficient that is also based on the spatial indication of blurring. The amplified high frequency portion of the separated image is recombined with the low frequency portion to form a processed video image and the processed video signal is provided for use in a display device. Advantageously, the local and spatial sharpening improves the user experience compared to a constant sharpening as shown on FIG. 5. FIG 5 illustrates an input image 510 of a high-quality video content and the corresponding uniformly sharpened image 530. The back-ground of image 530 is far too sharp, erasing the blur intent out of focus. Image 520 illustrates the blur map, where the background 522 is defined as a blurred region. The skilled in the art will notice that the blur map includes a sharp region 521 around the eyes of the character, wherein a sharpening of the gaze of the character could enhance the user experience. Image 540 illustrates the result of the sharpening with the blur map where the final result is visually better, preserving the blur intent (out of focus). Advantageously, the spatial blur-adaptation also reduces the artefacts after sharpening on UGC videos.

An example is shown in Fig.3. The initial frame is on the top left corner, the transmitted and decoded blur map on the top right corner. The bottom row shows the result, classical unsharp masking on the left, blur-adaptive unsharp masking on the right. The amount of sharpening is comparable for sharp areas, while sharpening artifacts on blurred areas are suppressed with the proposed technique (see skin, background for instance).

At step 810, video content, including metadata associated with the video content, is received. The video content may be received at the receiving circuit in a user device (e.g., tuner 603) and delivered from a video streaming service or other Internet service provider. The video content may alternatively by provided from a fixed or portable data storage device including, but not limited to, an optical disk, a magnetic storage disk, or an electronic memory storage device. Also, at step 810, metadata, including the indication of blurring, is extracted. The extraction may be performed in a processing unit (e.g., central processing unit 604) and/or in a video decoder (e.g., video decoder 605). In one embodiment, the spatial indication of blurring includes a blur metric value for each pixel of each frame of the video images or frames in the video content.

At step 820, the video content is separated into a high frequency portion and a low frequency portion. The separation, at step 820, may be performed in a video decoder (e.g., audio/video decoder 605) using many different types of filters including, but not limited to, an iterated median filter, edge preserving filters, bilateral filter, and a rolling guidance filter.

At step 830, the high frequency portion of the video image is level-adjusted based on the spatial indication of blur information. The high frequency portion of the separated image may be adjusted (e.g., amplified or attenuated) in a video decoder (e.g., audio/video decoder 605) to enhance edges and sharpen the image using a pixel-wise amplification coefficient $\alpha$. In one embodiment, the amplification coefficient $\alpha$ is adjusted or tuned using the blur map as described earlier.

At step 840, the amplified high frequency portion of the video image is recombined with the low frequency portion of the video image. The recombination, at step 840 may also be performed in a video decoder (e.g., audio/video decoder 605). At step 850, recombined video image, including the processed high frequency portion, is provided as a video signal for further processing. The further processing may include providing the video signal to a display device through a display interface (e.g., display interface 606).

It is important to note that some or all of the steps in process 700 may be combined with process 800 and implemented in a single device (e.g., user device 600 described in FIG. 6). For example, a blurry video signal may be provided over a network (e.g., through a media content streaming service) to a user device. The user device may determine a spatial indication of blurring using aspects of steps 720 and 730 described in process 700. The spatial indication of blurring may be used to sharpen the video content for display using aspects of steps 820, 830, 840, and 850 described in process 800. Some delay or latency will likely exist in order to determine the spatial indication of blurring.

It is also important to note that one or more steps of process 300 described in FIG. 3 and one or more steps of process 700 described in 700 may be combined into one process and implemented in a single device (e.g., user device 130 described in FIG. 1). For example, the processing and determination of metadata, including an indication of blurring, at step 330, may be implemented in the user device as part of a modified process 700 after receiving the media content from a content provider, at step 710.

It is to be appreciated that one or more of the various features and elements shown and described above may be interchangeable. Unless otherwise indicated, a feature shown in one embodiment may be incorporated into another embodiment. Further, the features and elements described in the various embodiments may be combined or separated unless otherwise indicated as inseparable or not combinable.

One or more embodiments above describe an apparatus and method for locally sharpening video content using a spatial indication of blurring. The embodiments include receiving a processing video signal to determine a spatial indication of the blurring in the video signal. The spatial blur indication may be determined in a number of ways. In one embodiment, the spatial blur indication is determined using a Singular Value Decomposition on patches centered on each pixels in a video image. The spatial blur indication is stored as a blur map and is optionally compressed to reduce the payload for transmission. The spatial blur indication is provided as metadata with the media content signal and may be streamed, or otherwise delivered, to users for processing and display.

The embodiments described above may also include receiving and processing media content that includes a spatial indication of blurring in the video signal in order to locally sharpen a video image for display. One or more embodiments describe receiving and using a spatial indication of blurring included as part of metadata for media content in order to process a video image or video signal that is part of the media content. The spatial indication of blurring is used in conjunction with a video sharpening circuit to improve the display of the video signal. The local blur metrics are used to adjust the processing of the high frequency portion of the video signal in order to tune a pixel-wise sharpening of the image for the video signal. Further, the techniques described herein further improve the preservation of intentional blurring that may be present in high quality videos. The techniques for generating and providing a spatial indication of blurring may also be used to provide an indication that some or all of the media content provided and displayed is blurry.

Although the embodiments which incorporate the teachings of the present disclosure have been shown and described in detail herein, those skilled in the art can readily devise many other varied embodiments that still incorporate these teachings. Having described preferred embodiments for an apparatus and method for sharpening a video using a spatial indication of blurring in a video signal, it is noted that modifications and variations can be made by persons skilled in the art in light of the above teachings. It is therefore to be understood that changes may be made in the particular embodiments disclosed which are within the scope of the teachings as outlined by the appended claims.

**Claims**

1. A method (300) comprising:

   generating (330) a spatial indication of blurring associated with a video signal, wherein the spatial indication of blurring is used to locally adjust the sharpness of a video image of the video signal.

2. The method (300) of claim 1, wherein the spatial indication of blurring includes a blur metric for each pixel of each video image in the video signal.

3. The method (300) of claim 2, wherein the blur metric is an average sum of singular values determined for a patch centered on said pixel of said video image using a Singular Value Decomposition.

4. The method (300) of claim 2, wherein the blur metric is an average sum of singular values determined for a patch centered on said pixel of a processed video image using a Singular Value Decomposition, wherein the processed video image is a difference image between said video image and a blurred version of said video image.

5. The method (300) of claim 1, further comprising providing (340) the spatial indication of blurring to a signal receiving apparatus by a streaming video service provider.

6. The method (300) of claim 4, wherein the spatial indication of blurring is encoded.

7. An apparatus (200) that performs the steps of any of the claims 1 to 6.

8. A method (700) comprising:

receiving (710) a video signal;
obtaining (720, 730) a spatial indication of blurring associated with the video signal;
locally adjusting (730) the sharpness of the received video signal using the spatial indication of blurring ; and
providing (740) the adjusted video signal for display on a display device.

9. The method (700) of claim 8, wherein the spatial indication of blurring includes a blur metric for each pixel of each video frame in the video signal.

10. The method (700) of claim 9, wherein the blur metric is an average sum of singular values determined for a patch centered on said pixel of said video image using a Singular Value Decomposition.

11. The method (300) of claim 9, wherein the blur metric is an average sum of singular values determined for a patch centered on said pixel of a processed video image using a Singular Value Decomposition, wherein the processed video image is a difference image between said video image and a blurred version of said video image.

12. The method (700) of claim 8, wherein obtaining (730) a spatial indication of blurring further comprises generating from the received video signal the spatial indication of blurring.

13. The method (700) of claim 8, wherein obtaining (720) a spatial indication of blurring further comprises receiving the spatial indication of blurring from a streaming video service provider.

14. The method (700) of claim 8, wherein the local adjusting further includes:

separating a signal representing an image in the plurality of video images into a high frequency portion and a low frequency portion;
locally adjusting the signal level of the high frequency portion of the separated signal using the spatial indication of blurring; and
recombining the adjusted high frequency portion of the separated signal with the low frequency portion of the signal.

15. An apparatus (600) that performs the steps of any of the claims 8-14.

100

110                                    120                                    130

| CONTENT | CONTENT | CONTENT | CONTENT | USER |
| SOURCE | | PROCESSING | METADATA | DEVICE |

## FIG. 1

200

NETWORK
INTERFACE          ~ 250

220

METADATA
GENERATOR — PROCESSOR(S) ~ 210

MEMORY          STORAGE

230               240

## FIG. 2

RECEIVE
CONTENT ~310

PROCESS
CONTENT ~320

PRODUCE
METADATA ~330

PROVIDE
METADATA AND ~340
CONTENT TO
NETWORK

300

# FIG. 3

Normal metric

Blur subtracted metric

Normal metric

Blur subtracted metric

FIG. 4

510

521 520 522

Input image Blur map

Unsharp masking Blur-adaptive UM

530 540

FIG. 5

FIG. 6

700 →

RECEIVE MEDIA
CONTENT AND
METADATA
~710

↓

PROCESS METADATA ~720

↓

PROCESS MEDIA
CONTENT
~730

↓

PROVIDE MEDIA
CONTENT FOR DISPLAY
BASED ON METADATA
~740

# FIG. 7

RECEIVE VIDEO CONTENT — 810

SEPARATE VIDEO CONTENT INTO HIGH AND LOW FREQUENCY PORTIONS — 820

AMPLIFY HIGH FREQUENCY PORTION BASED ON SPATIAL BLUR INFORMATION — 830

800

RECOMBINE HIGH FREQUENCY AND LOW FREQUENCY PORTIONS — 840

PROVIDE SHARPENED VIDEO CONTENT — 850

# FIG. 8

Europäisches
Patentamt

European
Patent Office

Office européen
des brevets

# EUROPEAN SEARCH REPORT

Application Number

EP 16 30 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/239549 A1 (KELLY SEAN C [US] ET AL) 26 October 2006 (2006-10-26) | 1,2,5-7 | INV.<br>G06T5/00 |
| Y | * paragraph [0044] *<br>* paragraph [0071] * | 3,4 | |
| Y | BOLAN SU ET AL: "Blurred image region detection and classification", PROCEEDINGS OF THE 2011 ACM MULTIMEDIA CONFERENCE & CO-LOCATED WORKSHOPS : NOV. 28 - DEC. 1, 2011, SCOTTSDALE, AZ, USA, 1 January 2011 (2011-01-01), page 1397, XP055290062, New York, USA DOI: 10.1145/2072298.2072024 ISBN: 978-1-4503-0616-4 * page 1398 - page 1399 * | 3,4,10, 11 | |
| X | MAIK VIVEK ET AL: "Spatially adaptive video restoration using truncated constrained least-squared filter", THE 18TH IEEE INTERNATIONAL SYMPOSIUM ON CONSUMER ELECTRONICS (ISCE 2014), IEEE, 22 June 2014 (2014-06-22), pages 1-2, XP032631075, DOI: 10.1109/ISCE.2014.6884530 [retrieved on 2014-08-26] | 8,9,12, 15 | TECHNICAL FIELDS SEARCHED (IPC)<br><br>G06T |
| Y | * II. SPATIALLY ADAPTIVE VIDEO RESTORATION; page 1 - page 2 * * figure 1 * | 10,11, 13,14 | |
| Y | WO 2015/103140 A1 (THOMSON LICENSING [FR]) 9 July 2015 (2015-07-09) * page 8 - page 9 * | 13 | |
| Y | US 2011/096201 A1 (YOO YOUNG-JIN [KR] ET AL) 28 April 2011 (2011-04-28) * abstract * * paragraph [0063] * | 14 | |

The present search report has been drawn up for all claims

| Place of search | Date of completion of the search | Examiner |
|---|---|---|
| Munich | 7 October 2016 | Celik, Hasan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**Europäisches Patentamt**
**European Patent Office**
**Office européen des brevets**

Application Number

EP 16 30 5129

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 16 30 5129

The Search Division considers that the present European patent application does not comply with the requirements of unity of invention and relates to several inventions or groups of inventions, namely:

1. claims: 1-7

   Pixel-wise feature extraction

   ---

2. claims: 8-15

   Integrated processing

   ---

## ANNEX TO THE EUROPEAN SEARCH REPORT
## ON EUROPEAN PATENT APPLICATION NO.

EP 16 30 5129

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2016

| Patent document cited in search report | | Publication date | Patent family member(s) | | Publication date |
|---|---|---|---|---|---|
| US 2006239549 | A1 | 26-10-2006 | NONE | | |
| WO 2015103140 | A1 | 09-07-2015 | CN | 105874806 A | 17-08-2016 |
| | | | KR | 20160105795 A | 07-09-2016 |
| | | | WO | 2015103140 A1 | 09-07-2015 |
| US 2011096201 | A1 | 28-04-2011 | KR | 20110044594 A | 29-04-2011 |
| | | | US | 2011096201 A1 | 28-04-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. FANG ; F. SHEN ; Y. GUO ; C. JACQUEMIN ; J. ZHOU ; S. HUANG.** A consistent pixel-wise blur measure for partially blurred images. *IEEE International Conference on Image Processing,* 2014

- **DENG.** A generalized unsharp masking algorithm. *IEEE Transactions on Image Processing,* 2011